# EUROPÄISCHE PATENTSCHRIFT

(11) **EP 3 154 913 B1**
(45) Veröffentlichungstag und Bekanntmachung des Hinweises auf die Patenterteilung: **05.12.2018**
(21) Anmeldenummer: 15727553.8
(22) Anmeldetag: 23.05.2015
(51) Int. Cl.: C03B 9/353, C03B 9/38, C03B 40/027

(54) **SCHLIESSMECHANISMUS FÜR DIE FORMHÄLFTE EINER I.S.-MASCHINE**
CLOSING MECHANISM FOR THE MOLD HALVES OF AN I.S. MACHINE
MÉCANISME DE FERMETURE DE MOITIÉS DE MOULE D'UNE MACHINE IS

(30) Priorität: 16.06.2014 DE 102014008534
(43) Veröffentlichungstag der Anmeldung: 19.04.2017
(73) Patentinhaber: Heye International GmbH, 31683 Obernkirchen (DE)
(72) Erfinder: ENGELKING, Stefan, 31693 Hespe (DE); WINKELHAKE, Dirk, 31688 Nienstädt (DE); FELGENHAUER, Benedikt, 32049 Herford (DE)
(74) Vertreter: Sobisch, Peter
(86) Internationale Anmeldenummer: PCT/EP2015/001062
(87) Internationale Veröffentlichungsnummer: WO 2015/192940

(56) Entgegenhaltungen:
- EP-A1- 2 230 217
- US-A- 4 652 291
- US-A1- 2005 005 647

## Beschreibung

Die Erfindung bezieht sich auf einen Schließmechanismus für die Formhälften einer I.S.-Maschine entsprechend dem Oberbegriff des Anspruchs 1.

Ein solcher Schließmechanismus, angewandt auf die Vorformen einer I.S.-Maschine ist beispielsweise aus der DE 33 46 466 C2 bekannt. Hierbei sind zwei, jeweils zur Halterung von drei Formhälften bestimmte Formenhalter vorgesehen, an deren oberseitigen Enden jeweils das eine Ende eines Kurbelarmes gelagert ist, dessen jeweils anderes Ende mit einer Antriebswelle in Verbindung steht, wobei mittels der sich vertikal erstreckenden Kolbenstange einer pneumatisch zu betätigenden, in einem seitlichen Gehäuse angeordneten Kolben-Zylinder-Einheit unter Zwischenanordnung von Übertragungshebeln gegenläufige Drehbewegungen der beiden Antriebswellen dargestellt sind. Die Formhälften können durch Ansteuerung der Kolben-Zylinder-Einheit zwischen einer Öffnungs- und einer Schließstellung des Schließmechanismus bewegt werden, und zwar entlang einer gekrümmten, die Formhälften leicht anhebenden Überführungskurve, wobei zur Beibehaltung einer zueinander parallelen Ausrichtung der einander gegenüberstehenden Formhälften entlang der Überführungskurve Lenker vorgesehen sind, die zusammen mit den genannten Kurbelarmen ein Parallelgestänge zur Führung einer jeden der beiden Formhalter bilden. Die Überführungskurve ist dahingehend eingerichtet, dass ausgehend von der Schließstellung, in der jeweils zwei aneinander liegende Formhälften sich von einer aufwärts erstreckenden Halsform bei Einleitung einer Öffnungsbewegung schlagartig von der Halsform lösen, wodurch eine Verschleißminderung erreicht werden soll. Ein Teil der zur Umsetzung der Linearbewegung der genannten Kolbenstange in symmetrisch gegenläufige Drehbewegungen der beiden Antriebswellen eingerichteten Komponenten ragt unterseitig aus dem Gehäuse heraus. Über ein mit einem Ventil ausgerüstetes Leitungssystem sind die Bereiche hinter den Formhälften und innerhalb der Formhalter mit Kühlluft beaufschlagbar.

Aus der DE 26 23 106 B2 ist ein weiterer Schließmechanismus bekannt, bei welchem die Überführungskurve der Formhälften insoweit in Abweichung von dem Gegenstand der DE 33 46 466 C2 geradlinig eingerichtet ist. Hierzu sind Formträgerhälften jeweils entlang zueinander paralleler, maschinenfest angeordneter Führungsstangen zwischen einer Schließ- und einer Öffnungsstellung mittels Druckluftmotoren verschiebbar angeordnet. Zwischen den Druckluftmotoren und den Formträgerhälften befindet sich ein vergleichsweise komplex ausgebildetes, durch einen gelenkig verbundenen Hebel gekennzeichnetes Getriebe. Der hiergezeigte Schließmechanismus ist gleichermaßen bei Vor und Fertigformen einer Glasformmaschine einsetzbar.

Charakteristisch für diese bekannten Schließmechanismen ist ein mechanisch komplexer Aufbau der Verbindung zwischen den Formenhaltern und dem eingesetzten Antrieb. Insbesondere aufgrund der Vielzahl an Überragungsgliedern ist die Darstellung einer möglichst spielfreien Verbindung schwierig. Auch die Einrichtung einer effektiven Kühlung zur Vermeidung von thermisch bedingten Verspannungen ins-besondere zwischen Formenhalter und Maschinengrundkörper findet keine hinreichende Beachtung.

Aus der EP 2 230 217 A1 ist ein Schließmechanismus für die Vorformhälften einer I.S.-Glasformmaschine bekannt, bei dem zwei Vorformhalter auf einer gemeinsamen Führungswelle aufeinander zu und voneinander fort linear parallel mit der Maßgabe geführt sind, dass beide Vorformhalter simultan in eine Öffnungs- oder eine Schließstellung überführbar sind. Die Führungswelle erstreckt sich auf einer Seite der beiden Vorformhalter. Nicht optimal an diesem Konzept ist der Umstand, dass dass eine symmetrische Kraftübertragung auf die mehreren, durch die Vorformhalter während des Formgebungsprozesses gehaltenen Vorformen nicht darstellbar ist.

Aus der US 2005/0005647 A1 ist ein zum Überführen von Külbeln von der Vorformseite einer Glasformmaschine zu einer Fertigformseite bestimmter Invertmechanismus bekannt, der mit einem Schließmechanismus zum Öffnen und Schließen der zum Erfassen der Külbel eingerichteten Mündungshalterame zusammengefasst ist. Hierzu ist eine Spindelwelle mit zwei gegenläufig orientierten, jeweils eine Spindelmutter tragenden Gewindeabschnitten vorgesehen, welche Gewindeabschnitte jeweils mit einem, zum Halten eines Külbels bestimmten Mündungshalterarm in Verbindung stehen. Die Gewindespindel ist über einen ersten Servomotor oszillierend zwischen einer Öffnungs- und einer Schließstellung der Mündungshalterarme, somit in Achsrichtung der Spindelwelle linear antreibbar. Koaxial zu der Gewindespindel, diese umgebend, erstreckt sich eine Kugelnutwelle, welche mit den Mündungshalterarmen über jeweils eine Kugelkeilmutter in Verbindung steht, wobei die Kugelnutwelle mittels eines zweiten Servomotors, unabhängig von dem ersten Servomotor zwecks Darstellung einer Schwenkbewegung der Mündungshalterarme zwischen einer der Vorformseite zugekehrten Stellung und einer der Fertigformseite zugekehrten Stellung um die Achse der Spindelwelle antreibbar ist. Informationen zur Ausführung eines während eines Formgebungsprozesses wirksamen Schließmechanismus der Vorformen sind dieser Druckschrift nicht entnehmbar.

Ein weiterer, mit dem Gegenstand der letztgenannten Druckschrift vergleichbarer, zum Öffnen und Schließen der Mündungshalterarme eines Invertmechanismus bestimmter und mit diesem baulich zusammengefasster Schließmechanismus ist aus der US 4652291 A bekannt.

Aus der WO 2010/102590 A2 ist ein anderer vergleichbarer Schließmechanismus für die Vor- oder Fertigformen einer Glasformmaschine bekannt, bei der die Formhalterhälften auf einer geradlinigen Führung zwischen einer Öffnungs- und einer Schließstellung verschiebbar aufgelagert sind. Die Führung wird durch eine im Querschnitt kreisförmige, sich auf der einen Seite der Formhalterhälften in einer solchen Höhenlage erstreckende erste Stange gebildet, die etwa der Hälfte der Höhenerstreckung der Formhalterhälften entspricht, wobei dieser ersten Stange auf der gegenüberliegenden Seite der Formhalterhälften eine im Querschnitt rechteckige, in einem U-förmigen Profil augenommene, sich entlang des Bodenbereichs der Formhalterhälften parallel zu der ersten Stange erstreckende zweite Stange gegenüberliegt. Einer jeden der Formhalterhälften ist ein unabhängiger Antrieb zugeordnet, der über einen Exzenter und einen in einer Nut geführten Kulissenstein mit der jeweiligen Formhalterhälfte in Antriebsverbindung steht.

Charakteristisch für diesen bekannten Schließmechanismus ist eine jeweils punktförmige Übertragung der Schließkraft auf die Formhalterhälften, und zwar mit Abstand zu der Führung. Neben einer ungleichförmigen Verteilung der Schließkraft über die Formhalterthälften kann hierbei ein Kippen der Formhalterhälften auf den Führungen nicht ausgeschlossen werden.

Es ist die Aufgabe der Erfindung, einen Schließmechanismus der eingangs bezeichneten Gattung mit Hinblick auf eine von thermischen Verspannungen freie Führung der Formenhalter zwischen einer Schließ- und einer Öffnungsstellung zu verbessern, insbesondere hinsichtlich seines mechanischen Konzepts zu vereinfachen. Darüber hinaus verbesserungsbedürftig erscheint auch das Antriebssystem mit Hinblick auf ein Optimum an Spielfreiheit, um eine möglichst genaue, gleichförmige und verschleißarme Führung der Formenhalter zu erreichen, Gelöst ist diese Aufgabe bei einem solchen Schließmechanismus durch die Merkmale des Kennzeichnungsteils des Anspruchs 1.

Erfindungswesentlich ist eine jochartige Ausgestaltung der beiden Formhalter, die auf zwei mit Abstand voneinander angeordneten, zueinander parallel verlaufenden geradlinigen Führungen aufgelagert und mittels eines Antriebs zwischen einer Öffnungsstellung, in der die von ihnen getragenen Formhälften voneinander entfernt sind und einer Schließstellung, in die Formhälften aneinander liegen, hierbei eine umfangsseitig geschlossene Form bildend, verschiebbar sind. Die Formhälften können mittels eines Schnellspannsystems an den jeweiligen Formhaltern fixiert werden, wobei an jedem der Formhalter eine, zwei oder auch mehrere Formhälften angebracht sind, die in der Schließstellung gleichmäßig gegeneinander verspannt sind. Dieses Grundkonzept zeichnet sich durch eine einfache mechanische Gestaltung aus, für deren Darstellung im Vergleich zum Stand der Technik weniger Komponenten benötigt werden.

Die Linearbewegung der beiden Formhalter wird durch ein Spindelgetriebe dargestellt, dessen mit dem Antrieb in Verbindung stehende Gewindespindel zwei gegenläufige Gewindeabschnitte aufweist, die ihrerseits mit Gewindemuffen im Eingriff stehen, die mit den Formhaltern in Verbindung stehen. Auf diese Weise ist eine bezüglich einer vertikalen Mittenebene symmetrische Öffnungs- und Schließbewegung darstellbar.

Der Formhalter ist mit einem zur Führung eines Kühlmittels bestimmten Leitungsnetzwerk ausgestattet, wobei als Kühlmittel Kühlluft eingesetzt wird.

Zur Kühlung von Teilen des Maschinengrundkörpers, insbesondere von Gehäuseteilen desselben ist zumindest ein zur Führung eines Kühlmittels bestimmtes Netzwerk eingerichtet. Auch die in diesem Netzwerk strömende Kühlmittelmenge ist vorzugsweise einstellbar eingerichtet.

Die Merkmale der Ansprüche 2 und 3 sind auf eine erste Variante eines dem Schließmechanismus zugrundeliegenden Antriebssystems gerichtet. Diese besteht aus einem elektrischen Servomotor, mittels welchem die Öffnungs- und Schließbewegung durchgeführt wird und zumindest einer pneumatisch zu betätigenden Kolben-Zylinder-Einheit, mittels welcher in der Schließstellung die Verspannung der Formhalter durchgeführt wird. Die Achse des sich auf einer Seite der Formhalter angebrachten Servomotors erstreckt sich vorzugsweise parallel zu den Führungen und es ist die Kolben-Zylinder-Einheit am Maschinengrundkörper gehalten bzw. abgestützt.

Zwischen der bzw. jeder Kolben-Zylinder-Einheit und den Formhaltern befindet sich entsprechend den Merkmalen des Anspruchs 4 ein Kniehebelgetriebe, über welches in der Schließstellung des Schließmechanismus die erforderliche Spannkraft aufgebracht wird.

Die Merkmale des Anspruchs 5 sind auf eine zweite Variante eines dem Schließmechanismus zugrundeliegenden Antriebssystems gerichtet. Diese besteht aus zwei elektrischen Servomotoren die beiderseits der Formhalter angeordnet sind und sowohl zur Darstellung von Öffnungs- und Schließbewegungen als auch in der Schließstellung zur Aufbringung einer Verspannung eingerichtet sind.

Insbesondere bei der vorstehend beschriebenen ersten Variante können thermische Verspannungen verhindert werden. Bei der zweiten Variante hingegen kann der zweite Antrieb in Linearführungen gleitfähig angeordnet sein, so dass keine Verspannungen zwischen Formhalter und Maschinengrundkörper auftreten.

Entsprechend den Merkmalen des Anspruchs 6 sind Führungen zwischen dem Maschinengrundkörper und den Formhälften vorgesehen, die eine betriebsbedingte Wärmedehnung der jeweiligen Formhälfte ermöglichen, so dass Verspannungen insoweit vermieden werden. Die Positionierung dieser Führungen, nämlich die konstruktive Einrichtung von feststehendem Teil und demgegenüber beweglichem Teil sollte mit der Maßgabe vorgenommen werden, dass jedenfalls eine behinderungsfreie Wärmedehnung der Formhalter in deren Längsrichtung von einem mittleren Bereich ausgehend und in Richtung zur Außenseite hin fortschreitend möglich ist.

Die Drehmomentübertragung von dem Servomotor / den Servomotoren auf das jeweilige Spindelgetriebe erfolgt entsprechend den Merkmalen des Anspruchs 7 über ein als Stirnradgetriebe ausgebildetes Getriebe, wobei zur Darstellung eines spielfreien Antriebs zumindest eines dessen Zahnräder aus zwei, relativ zueinander verdrehbaren Zahnscheiben besteht. Die Verdrehposition ist fixierbar, so dass nach Maßgabe der Verdrehbarkeit ein Spiel zwischen den Zahnrädern, jedoch beispielsweise auch im Verhältnis zu einer in der Antriebskette vorhandenen Spindel ausgleichbar ist.

Das Konzept der Zahnscheiben ist gleichermaßen bei beiden Varianten einsetzbar.

Das genannte Leitungsnetzwerk kann entsprechend den Merkmalen der Ansprüche 8 bis 11 auch zur Kühlung einer Formhälfte und / oder einer Mündungsform eingerichtet sein. In Ausgestaltung dieser Merkmale können die der Mündungsform bzw; der Formhälfte zugeführten Mengen an Kühlmittel individuell einstellbar sein. In weiterer Ausgestaltung können zumindest Teile eines solchen Leitungsnetzwerks für eine Permanentkühlung eingerichtet sein. Dies ermöglicht insoweit eine dauerhafte Kühlung während eines laufenden Prozesses. Heirüber hinaus können Viertelformen der Formhälften hinsichtlich der Führung eines Kühlmittels individuell einstellbar eingerichtet sein. Dies ermöglicht eine flexible, an den Einzelfall angepasste Einstellung.

Das zur Führung innehalb des Netzwerks eingesetzte Kühlmittel kann entsprechend den Merkmalen des Anspruchs 12 in einem geschlossenen, zumindest einen Kühler bzw. Wärmetauscher und eine Pumpe beinhaltenden Kreislauf geführt sein.

Entsprechend den Merkmalen des Anspruchs 13 können mehrere voneinander unabhängig einstellbare Kreislaufführungen für das Kühlmittel vorgesehen sein. Auf diese Weise ist die Darstellung einer willkürlich unterschiedlich einstellbaren Kühlwirkung entsprechend der räumlichen Verteilung der beiden Kreislaufführungen möglich.

Gleiches gilt entsprechend den Merkmalen des Anspruchs 14 für ein Schmierstoffversorgungssystem, welches als Umlaufschmierung angelegt ist, wobei der eingesetzte Schmierstoff gegebenenfalls nach Kühlung und Filterung den jeweiligen Schmierstellen mehrfach zugeführt werden kann. Dies ist gegenüber einer Verlust-Schmierung mit besonderen Vorteilen, insbesondere auch unter dem Aspekt eines Schutzes der Umwelt verbunden.

Der Schmierstoff tritt entsprechende den Merkmalen des Anspruchs 15 aus der Oberseite der zur Auflagerung der Formhalter bestimmten Führungen aus hierbei auf diesen einen Schmierfilm bildend, so dass sich eine leichtgängige Verschiebung der Formhalter ergibt.

Die Merkmale der Ansprüche 16 bis 18 sind auf eine weitere Ausgestaltung der Schmierstoffversorgung gerichtet. Wesentlich ist, dass ein Schmierstoffbad in einem Gehäuse eingerichtet ist, das zur Aufnahme eines Getriebes, eines Spindelgetriebes und im Bedarfsfall auch eines Kniehebelgetriebes eingerichtet ist. Das Gehäuse ist zur Aufnahme des aus den Öffnungen der Oberseite der jeweiligen Führung austretenden Schmierstoffs eingerichtet und mit einem Überlauf versehen, so dass sich ein definiertes Niveau eines Schmierstoffbades innerhalb des Gehäuses ergibt. Das Gehäuse bildet somit einen Teil des zur Darstellung der Umlaufschmie-rung bestimmten Kreislaufs. Die zur Auflagerung der Formhalter bestimmten Füh-rungen befinden sich in unmittelbarerer Nähe zu jeweils einem solchen Gehäuse.

Das genannte Gehäuse ist entsprechend den Merkmalen des Anspruchs 19 durch ein Deckelsegment geschlossen, so dass die innerhalb des Gehäuses angeordneten Maschinenkomponenten und gleichermaßen der Schmierstoff vor Umgebungseinflüssen, insbesondere Verschmutzungen geschützt angeordnet sind. Diesem Schutz dient auch die innenseitige Beaufschlagung des Gehäuses mit Sperrluft.

Die Verbindung zwischen einem Servomotor und einem Getriebe ist ent-sprechend den Merkmalen des Anspruchs 20 durch eine ohne die Notwendigkeit eines Werkzeugs zu betätigende Klemmverbindung gekennzeichnet. Die Demontage und gleichermaßen die Montage eines Servomotors gestalten sich somit vergleichsweise einfach.

Die Merkmale der Ansprüche 21 bis 25 sind auf die Fixierung der Formhälften an den jeweiligen Formhaltern gerichtet. Diese Maßnahmen zielen darauf ab, die mit der positionsgenauen Montage sowie der Demontage einer Formhälfte verbundenen Maßnahmen zu vereinfachen. Wesentlich ist, dass sowohl an den Formhälften als auch den Formhaltern zueinander kompatible Konstruktionselemente angebracht sind, die eine zentrierte und in ihrer Montageposition gesicherte Fixierung einer jeden Formhälfte ermöglichen. Diese Elemente bestehen beispielsweise aus einem, mit der Formhälfte in Verbindung stehenden Nutenstein und einem in dem Formhalter geführten in einem Haken endenden Spanner, der zum Einhängen und Verspannen einer Formhälfte gegenüber dem Formhalter eingerichtet ist. Die Betätigung des Spanners kann vorteilhafterweise mittels eines federbelasteten Exzenters bewirkt werden, so dass der Spanner in jedem Fall zwischen einer ein Einhängen der Formhälfte ermöglichenden Demontageposition und einer den verspannten Zustand herbeiführenden Montageposition verschiebbar ist.

Die Erfindung wird im Folgenden unter Bezugnahme auf die Zeichnungen schematisch dargestellten Ausführungsbeispiele näher erläutert werden. Es zeigen:
Fig. 1 eine erste Variante eines Schließmechanismus in perspektivischer Darstellung in einer Öffnungsstellung;
Fig. 2 eine Draufsicht auf den Schließmechanismus gemäß Fig. 1 in ebener Darstellung;
Fig. 3 eine Darstellung des Schließmechanismus gemäß Fig. 2 in einer vertikalen Schnittebene;
Fig. 4 eine teilweise ebene Darstellung des Schließmechanismus entsprechend einer Blickrichtung IV der Fig. 1;
Fig. 5 eine zweite Variante eines Schließmechanismus in perspektivischer Darstellung in einer Öffnungsstellung;
Fig. 6 eine Draufsicht auf den Schließmechanismus gemäß Fig. 5 in ebener Darstellung;
Fig. 7 eine teilweise ebene Darstellung des Schließmechanismus entsprechend einer Blickrichtung VII der Fig. 5;
Fig. 8 eine Darstellung des Schließmechanismus gemäß Fig. 5 in einer vertikalen Schnittebene VIII - VIII der Fig. 6;
Fig. 9 eine Ansicht des Schließmechanismus gemäß Fig. 5 in einer Ebene IX - IX der Fig. 5;
Fig.10 eine ebene Ansicht des Schließmechanismus in teilweiser Schnittdarstellung entsprechend einer Ebene X - X der Fig. 5;
Fig. 11 eine Draufsicht auf den Schließmechanismus in ebener teilweiser Darstellung entsprechend einer Blickrichtung XI der Fig. 5;
Fig. 12 eine Teilansicht des Schließmechanismus in einer vertikalen Schnittebene XII - XII der Fig. 11;
Fig. 13 eine perspektivische Ansicht der Fig. 12 in teilweiser Schnittdarstellung;
Fig. 14 eine Darstellung einer Kühlluftführung im Formenhalter in teilweiser Schnittdarstellung;
Fig. 15 eine perspektivische Darstellung der Befestigung des Antriebs des Schließmechanismus gemäß Fig. 5;
Fig. 16 eine ebene Ansicht des Antriebs gemäß Fig. 15 entsprechend einer Blickrichtung XVI der Fig. 15;
Fig. 17 eine ebene Ansicht des Antriebs in einer Blickrichtung XVII der Fig. 16;
Fig. 18 eine Ansicht des Antriebs in einer Schnittebene XVIII- XVIII der Fig. 16;
Fig. 19 eine vergrößerte Teildarstellung des dem Antrieb gemäß Fig. 15 zugeordneten Getriebes;
Fig. 20 eine Ansicht des Getriebes entsprechend einer Blickrichtung XX der Fig. 19;
Fig. 21 eine schematische Darstellung der Kühlwasserverteilung innerhalb des Maschinengrundkörpers;

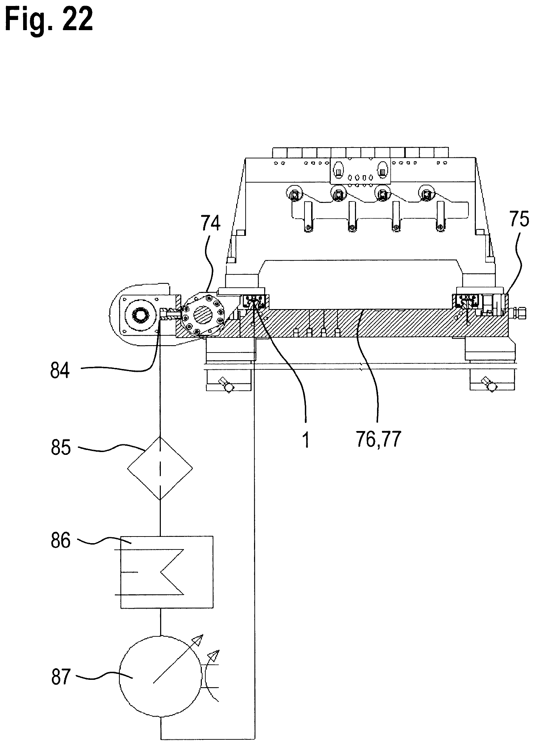

Fig. 22 eine schematische Darstellung des Schmiermittelkreislaufs des SchließMechanismus;
Fig. 23 eine perspektivische Teildarstellung eines Formenhalters des Schließmechanismus;
Fig. 24 eine Teildarstellung des Formenhalters in einer Schnittebene XXIV - XXIV der Fig. 23;

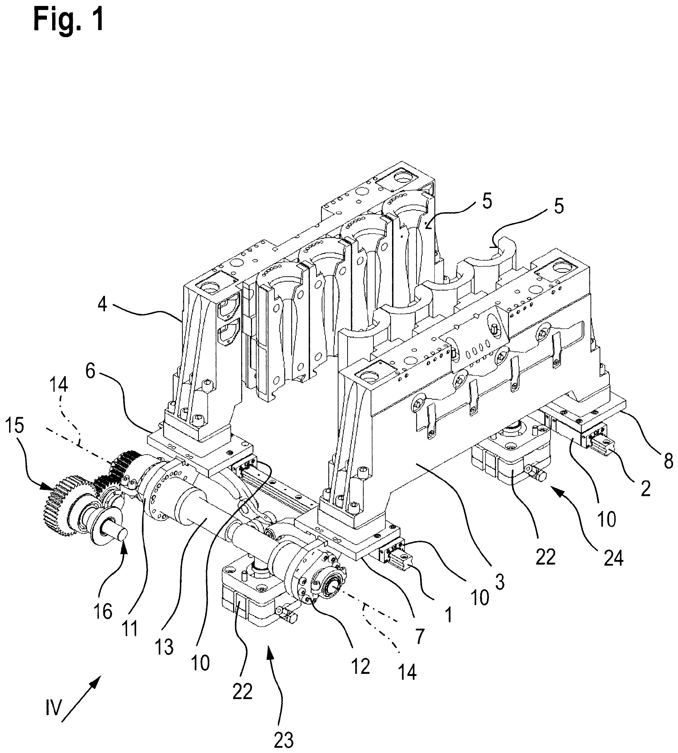

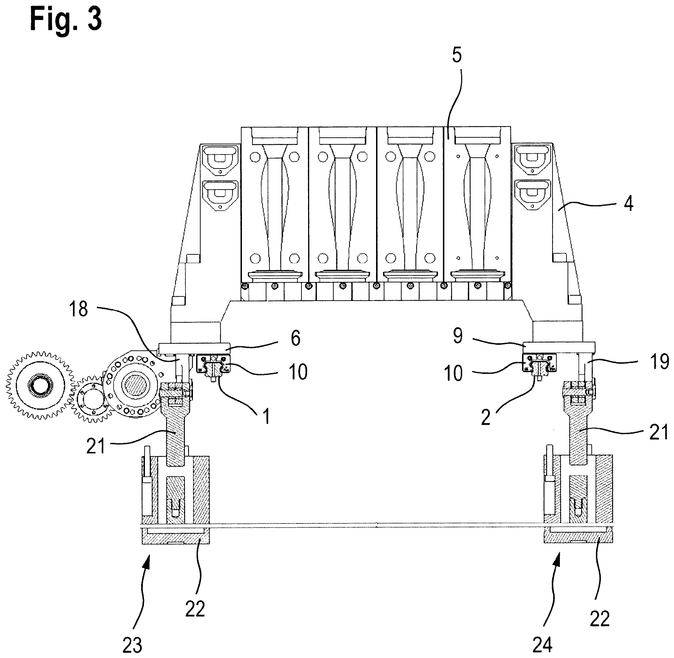

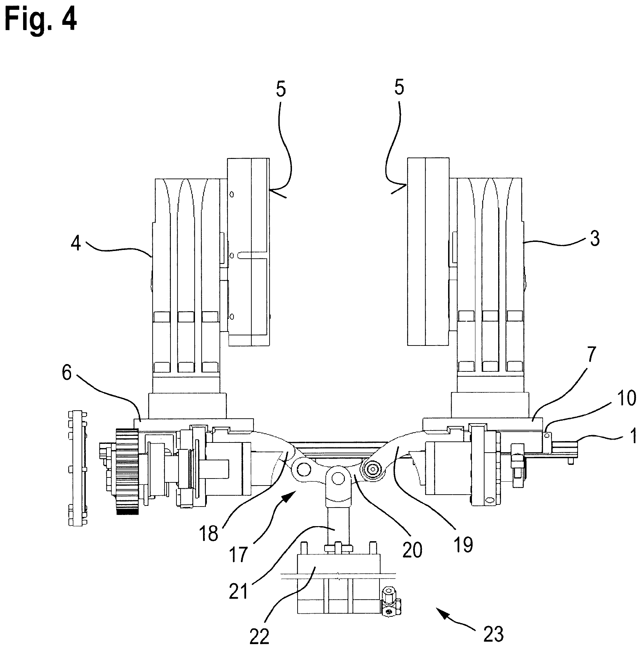

Zur Beschreibung des grundsätzlichen Aufbaus einer ersten Variante eines erfindungsgemäßen Schließmechanismus wird im Folgenden auf die Darstellungen der Figuren 1 bis 4 Bezug genommen.

Diese zeigen zwei auf zueinander parallelen beabstandeten Führungen 1, 2 aufgelagerte Formhalter 3, 4, die jeweils zur Halterung von vier Formhälften 5 eingerichtet sind. Die Auflagerung erfolgt auf Grundplatten 6, 7, 8 und 9, welche über Schlitten 10 gleitfähig auf den Führungen 1, 2 angeordnet sind.

Mit 11, 12 sind jeweils Montageplatten bezeichnet, die an den Grundplatten 6, 7 befestigt sind, und sich in zueinander parallelen Ebenen von den Grundplatten fort erstrecken. An diesen Montageplatten ist ein Spindelgetriebe 13 gelagert, dessen Achse 14 sich parallel zu den Führungen 1, 2 erstreckt und das dazu eingerichtet ist, eine Linearbewegung der Grundplatten 6, 7 und auf diese Weise der Formhalter 3, 4 parallel zu der Achse 14 zwischen einer in den Zeichnungen dargestellten Öffnungsstellung und einer Schließstellung zu generieren. Praktisch kann das Spindelgetriebe 13 aus zwei Spindeltrieben mit gegenläufigem Gewinde bestehen.

Die Antriebsbewegung des Spindelgetriebes 13, und zwar sowohl in Richtung einer Öffnung als auch einer Schließung der Formhälften 5 wird durch einen in den Zeichnungen nicht dargestellten elektrischen Servomotor erzeugt, der über ein Getriebe 15 mit dem Spindelgetriebe 13 in Antriebsverbindung steht und dessen Achse sich parallel zu der Achse 14 des Spindelgetriebes 13 erstreckt.. Der Servomotor einschließlich des Getriebes 15 ist wie die beiden Führungen 1, 2 auf einem gemeinsamen Maschinenrahmen einer ebenfalls zeichnerisch nicht dargestellten Glasformmaschine angebracht. Der genannte Servomotor steht an der Stelle 16 mit dem Getriebe 15 in Verbindung.

Jeweils zwei, einander senkrecht zu den Führungen 1, 2 gegenüberliegende Grundplatten 6 bis 9 stehen über ein Kniehebelgetriebe 17 in Verbindung, wobei unmittelbar an den Grundplatten jeweils ein Kniehebel 18, 19 schwenkbar angelenkt ist, wobei die den Grundplatten abgekehrten Enden der Kniehebel 18, 19 an den gegenüberliegenden Enden eines, ein Kniegelenk bildenden Verbindungshebels 20 angelenkt sind, der mittig in einer Richtung senkrecht zu einer Verbindungslinie zwischen den Anlenkungspunkten der untereinander gleich beschaffenen Kniehebel 18, 19 durch die Kolbenstange 21 einer Kolben-Zylinder-Einheit 22 beaufschlagt ist.

Die pneumatisch betätigbare, am Maschinengrundkörper abgestützte Kolben-Zylinder-Einheit 22 bildet zusammen mit dem Kniehebelgetriebe 17 eine zur Verspannung der Formhalter 3, 4 und damit der Formhälften 5 in der Schließstellung bestimmte, der Führung 1 zugeordnete Antriebseinheit 23, wobei der Führung 2 eine weitere konstruktiv identische derartige Antriebseinheit 24 zugeordnet ist.

Die Kolben-Zylinder-Einheiten 23, 24 befinden sich stets mittig zwischen den Formhaltern 3, 4, so dass aufgrund eines zu einer vertikalen Mittelebene symmetrischen Aufbaus der Kniehebelgetriebe 17 der beiden Antriebseinheiten 23, 24 die Aufbringung dementsprechend symmetrischer Spannkräfte darstellbar ist.

Die Schließbewegung der Formhalter 3, 4 wird bei diesem ersten Ausführungsbeispiel durch den, dem Spindelgetriebe 17 zugeordneten Antrieb bewirkt, wohingegen deren Verspannung pneumatisch unter Mitwirkung der beiden Kniehebelgetriebe 17 erfolgt.

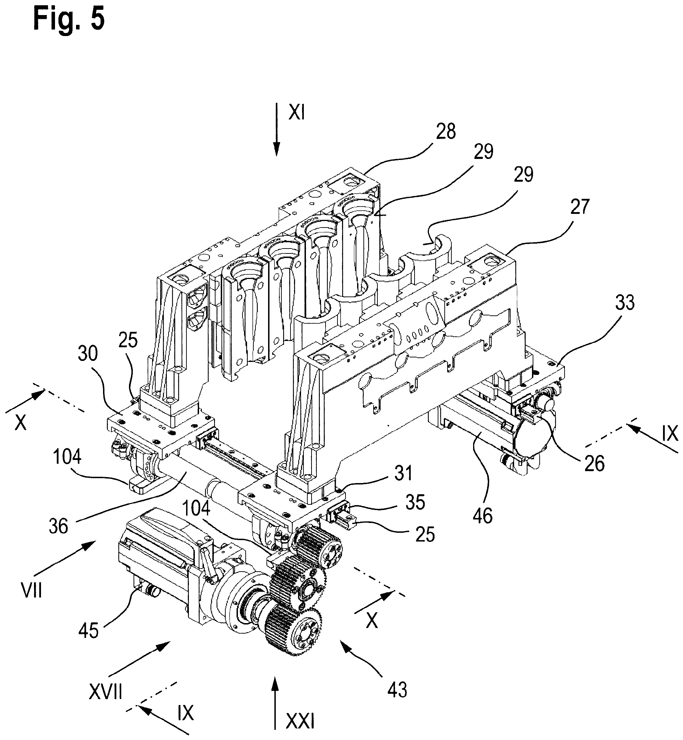

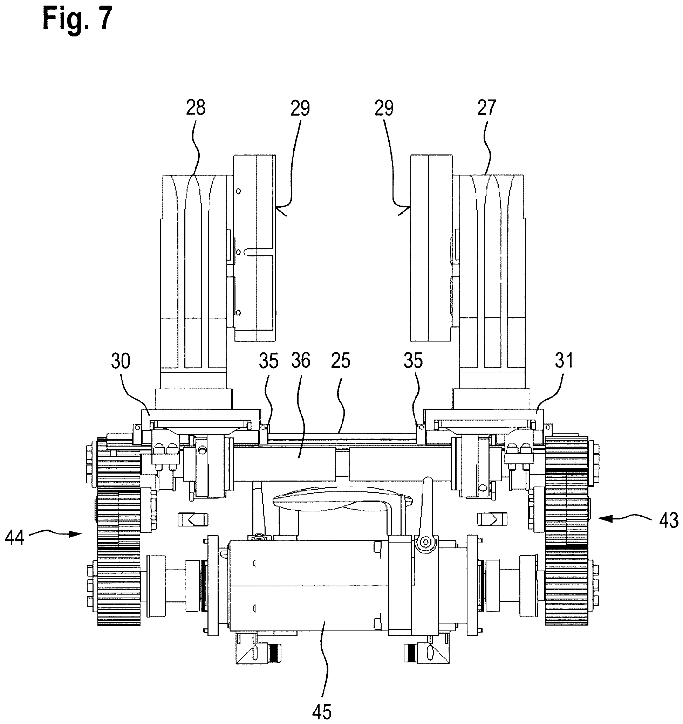

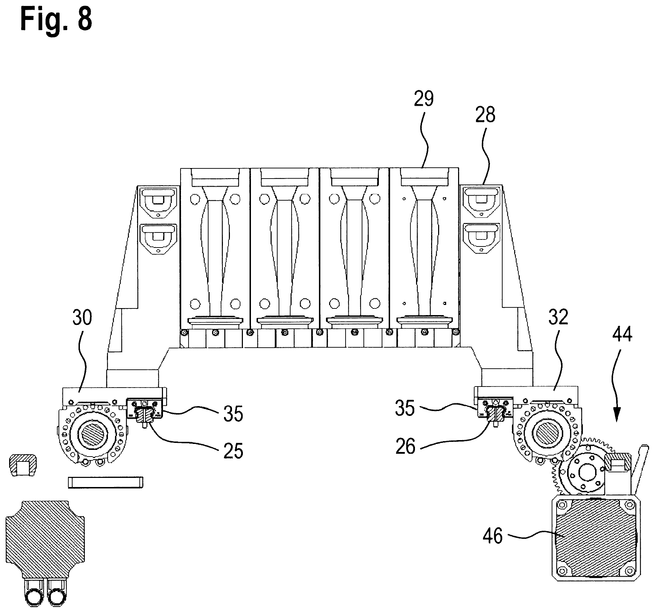

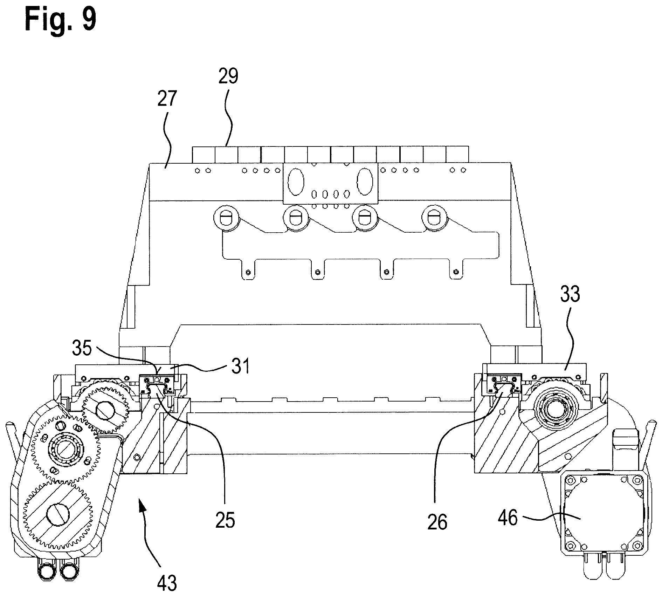

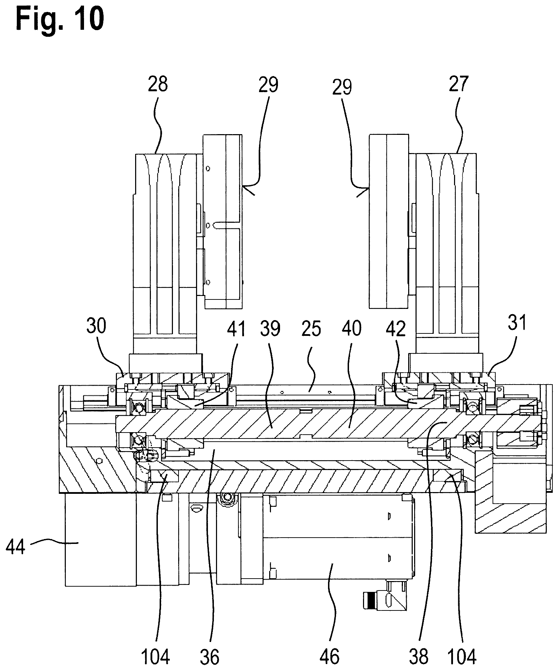

Zur Beschreibung des grundsätzlichen Aufbaus einer zweiten Variante eines erfindungsgemäßen Schließmechanismus wird im Folgenden auf die Darstellungen der Figuren 5 bis 10 Bezug genommen.

Diese zeigen zwei sich parallel und Abstand zueinander erstreckende Führungen 25, 26, auf denen zwei Formhalter 27, 28 zwischen einer in den Zeichnungen dargestellten Öffnungsstellung und einer Schließstellung gleitfähig aufgelagert sind. Die Formenhalter 27, 28 sind in einer im Folgenden noch zu beschreibenden Weise als Träger von Formhälften 29 konzipiert. Die Auflagerung der Formhalter 27, 28 erfolgt unter Zwischenanordnung von Grundplatten 31, 32 und 33, 34 die paarweise einem jeden der Formhalter 27, 28 zugeordnet sind und die unter Zwischenanordnung von Schlitten 35 gleitfähig auf den Führungen 25, 26 gelagert sind.

Die beiden einander entlang der Führungen 25, 26 paarweise gegenüberliegenden Grundplatten 30, 31 sowie 32, 33 stehen jeweils über Spindelgetriebe 36, 37 in Verbindung wobei jedes Spindelgetriebe 36, 37 aus einer Gewindespindel 38 mit zwei gegenläufigen Gewindeabschnitten 39, 40 besteht, die jeweils mit einer Gewindemuffe 41, 42 im Eingriff stehen, so dass eine Antriebsverbindung dargestellt ist, welche zur Generierung einer hinsichtlich einer vertikalen Mittelebene zwischen den Formhaltern 27, 28 symmetrischen Öffnungs- und Schließbewegung eingerichtet ist. Die Gewindemuffen 41, 42 sind an den Unterseiten der Grundplatten 30, 31 sowie 32, 33 mit Hinblick auf eine Übertragung von Axialkräften im Sinne einer Öfnungs- und einer Schließbewegung der Formhalter 27, 28 gelagert.

Die einander gegenüberliegenden Enden der Spindelgetriebe 36, 37 stehen jeweils über ein Getriebe 43, 44 mit einem Servomotor 45, 46 in Antriebsverbin-dung, wobei die Art der Anbringung der Servomotoren im Folgenden noch erläutert werden wird. Beide Servomotoren 45, 46 sind jeweils an den, den genannten Enden der Spindelgetriebe 36, 37 jeweils gegenüberliegenden Seiten der Getriebe 43, 44 angekuppelt und erstrecken sich unterhalb der durch die beiden Führungen definierbaren Ebene parallel zu den Spindelgetrieben 36, 37.

Sowohl die Schließbewegung der Formhalter 27, 23 als auch deren Verspannung werden durch die beiden Servomotoren 45, 46 bewirkt.

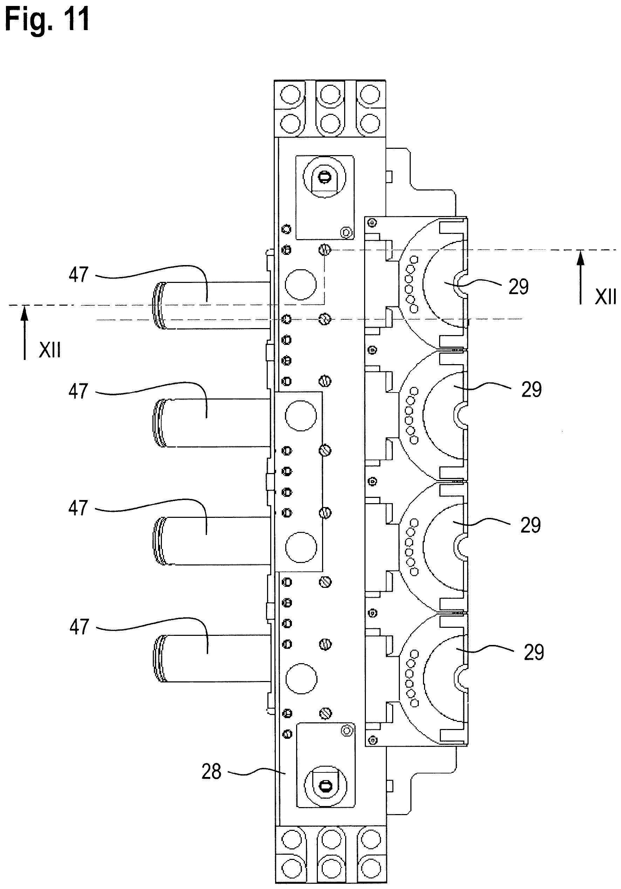

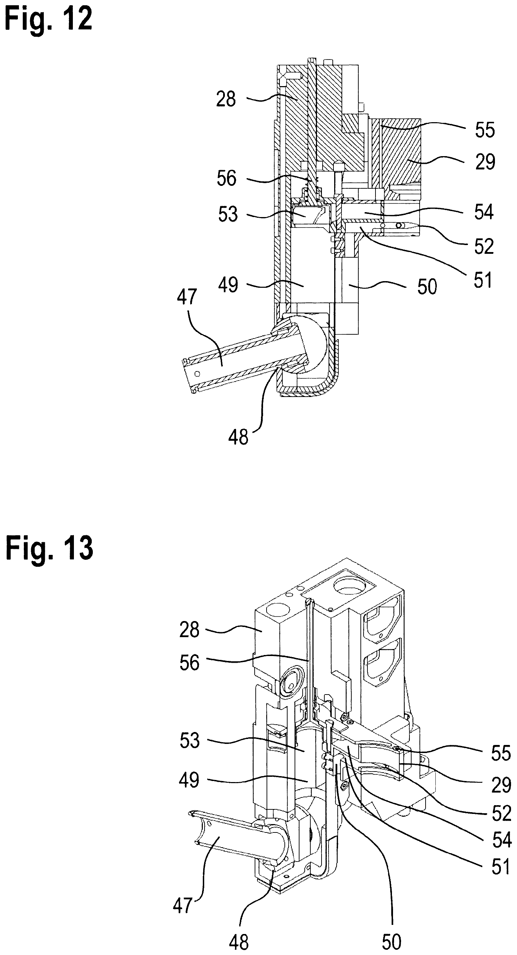

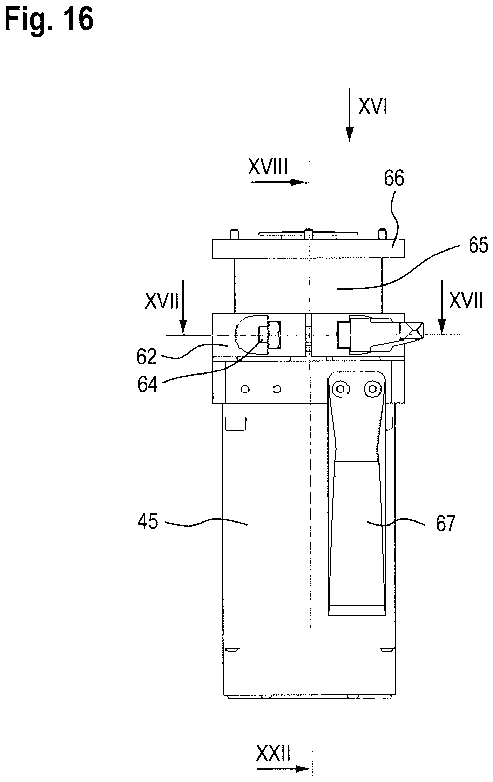

Zur Beschreibung einer Kühlluftführung wird im Folgenden ergänzend auf die zeichnerischen Darstellungen der Figuren 11 bis 16 Bezug genommen.
Der Formhalter 28 ist auf seiner den Formhälften 29 abgekehrten Seite mit einer der Anzahl der Formhälften, hier vier zur Führung von Kühlluft bestimmten Leitungselementen 47 versehen, die mit einer zeichnerisch in den Figuren 11 bis 15 nicht dargestellten Druckluftquelle in Verbindung stehen. Die den Formhaltern 28 gegenüberliegenden Formhalter 27 sind gleichermaßen ausgerüstet, so dass die nachfolgende Beschreibung auf die Formhalter 28 beschränkt werden kann.

Jedes Leitungselement 47 endet auf seinem dem Formenhalter 28 zugekehrten Ende in einer hohlen Welle 48 am unteren Ende des Formenhalters, von der eine vertikale weitere Leitung 49 über eine erste Kammer 53 und eine sich anschließende zweite Kammer 54 zu einer Reihe von Kühlleitungen 55 innerhalb einer Formhälfte 29 führt, wobei die Kühlleitungen 55 in peripherer Richtung bezüglich der Formhälfte 29 gleichförmig entlang einer konzentrisch zu deren Achse verlaufenden Kreislinie verteilt angeordnet sind. Die Kammer 54 erfüllt somit eine Verteilfunktion für die Kühlluft, so dass die Darstellung einer das Volumen der Formhälfte gleichmäßig erfassenden Kühlwirkung erreicht ist. Die Austrittsöffnungen der Kühlleitungen 55 befinden sich in der Oberseite der Formhälfte 29.

Mit 56 ist ein Stellorgan bezeichnet, welches in der Kammer 53 wirksam ist und zur Steuerung des durch diese Kammer geführten Kühlluftstromes, somit der Kühlluft, die durch die Kühlleitungen 55 strömt und zur Kühlung der Formhälften 29 dient. Ihm ist ein zeichnerisch nicht dargestellter Antrieb zugeordnet. Mittels dieser Stellorgane 56 ist beispielsweise eine individuelle Einstellmöglichkeit für einzelne oder auch alle Viertelformen der Formhälften 29 darstellbar.
Mit 50, 51 sind weitere, in dieser Reihenfolge aufeinander folgende Kammern be zeichnet, die in einem Austrittsorgan 52 enden, aus dem ein zur Kühlung einer Mündungsform des herzustellenden Hohlglasartikels bestimmter Kühlluftstrom austritt.

Mit 57 ist eine weitere hohle Welle bezeichnet, über die das der Aufnahme 48 gegenüberliegende Ende des Leitungselements 47 mit einer Leitung 58 in durchgängiger Verbindung steht, in deren Verlauf neben einer Regelklappe 59 eine Verschlussklappe 60 angeordnet sind.

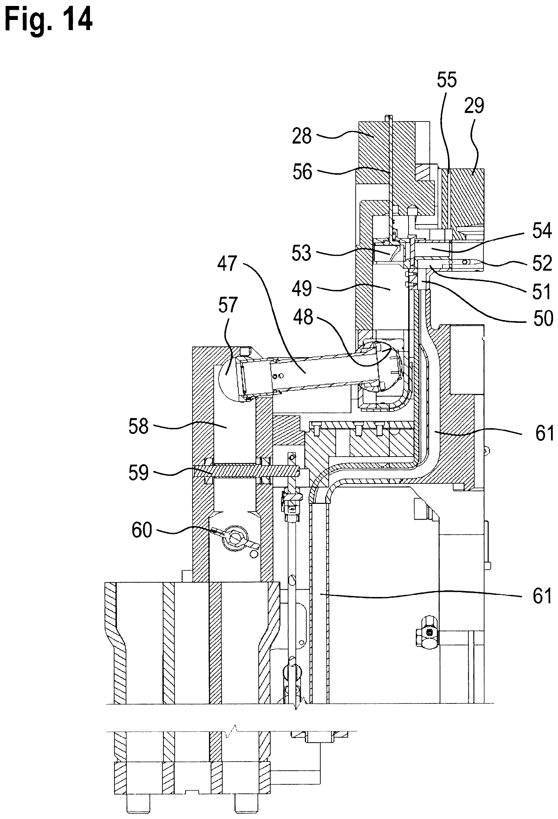

Mit 61 ist eine Leitung bezeichnet, die an ihrem einen, in Fig. 14 oberseitigen Ende mit den Kammern 50, 51 in durchgängiger Verbindung steht und somit der Führung eines der Kühlung der Mündungsform dienenden Kühlluftstromes dient.

Die der Aufnahme 57 sowie der Kammer 50 gegenüberliegenden Enden der Leitungen 58, 61 stehen in zeichnerisch nicht dargestellter Weise mit einer Druck- bzw. Kühlluftquelle in Verbindung.

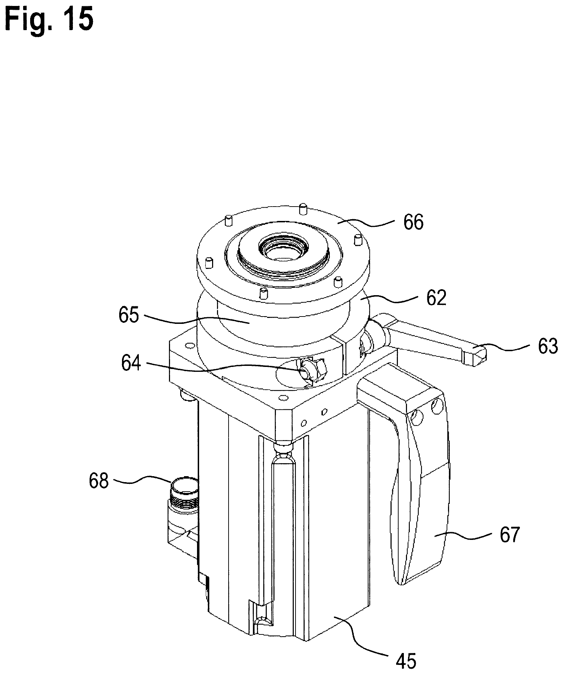

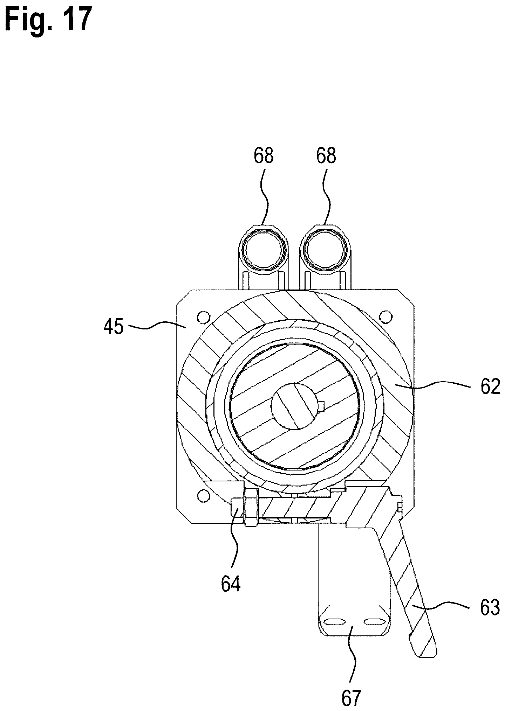

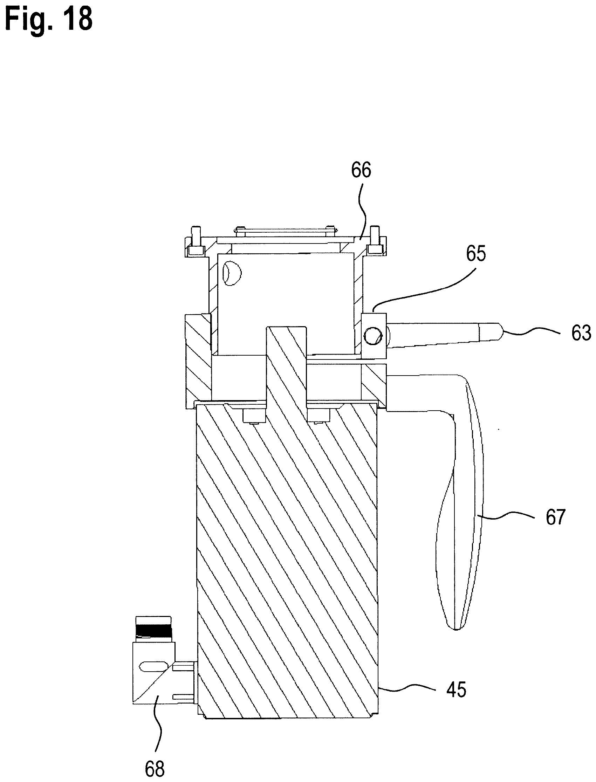

Zur Beschreibung der Anbindung eines Servomotors 45, 46 an ein Vorgelegegetriebe 43, 44 wird im Folgenden auf die Figuren 15 bis 18 Bezug genommen.

Diese Anbindung ist konstruktiv mit Hinblick auf eine einfach und schnell durchführbare Montage bzw. Demontage der Baugruppe "Servomotor" angelegt und ist durch eine Klemmverbindung gekennzeichnet, bei der ein, einen axialen Spalt aufweisender Ringspannkörper 62 mittels eines Spannhebels 63 gespannt sowie entspannt werden kann. Der Spannhebel 63 steht zu diesem Zweck mit einer sich peripher zu dem Ringspannkörper 62 erstreckenden Spannschraube 64 in Wirkverbindung, wobei im gespannten Zustand eine reibschlüssige Verbindung zwischen einem zylindrischen Gehäusekörper 65, der über einen Flansch 66 mit dem Gehäuse des zugeordneten Getriebes 43 in Verbindung steht und dem Gehäuse des mit dem Ringspannkörper 62 in Verbindung stehenden Gehäuses des Servomotors 45 hergestellt ist. Mittels eines an dem Gehäuse des Servomotors 45 angebrachten Handgriffs 67 ist eine bequeme Handhabung während eines Montage- bzw. eines Demontagevorgangs ermöglicht.
Eine solche Fixierung eines Servomotors ist bei beiden Varianten gleichermaßen einsetzbar.

Mit 68 ist der elektrische Anschluss des Servomotors 45 bezeichnet.

Die Verbindung zwischen einer Abtriebswelle des Servomotors 45 und einer zugekehrten Ausgangswelle des Getriebes 43 kann beispielsweise durch eine Steckverbindung dargestellt sein.

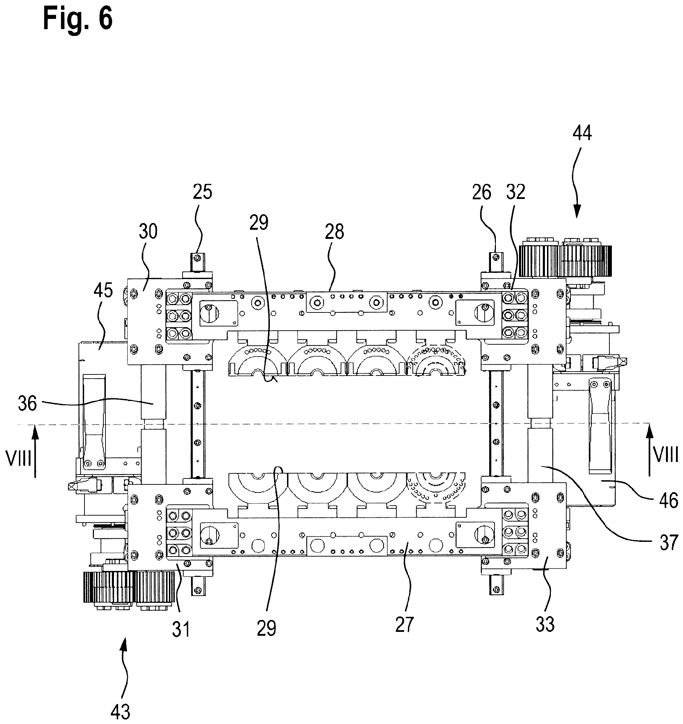

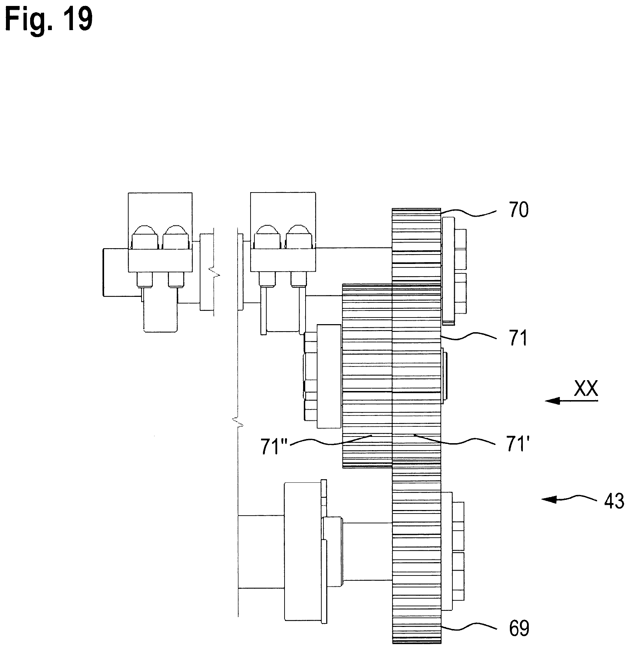

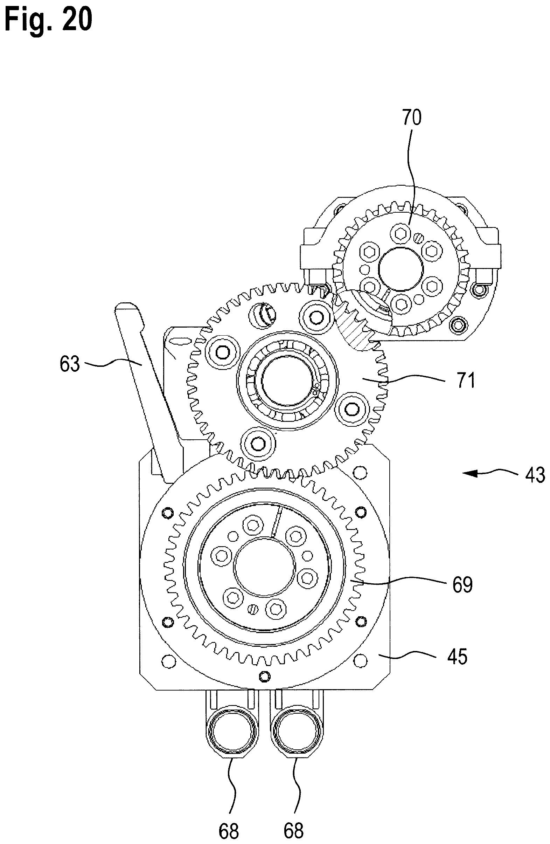

Zur Beschreibung eines Getriebes 43, 44 entsprechend Fig. 6 wird Im Folgenden auf die Darstellungen der Figuren 19 und 20 Bezug genommen. Beide Getriebe 43, 44 sind gleich beschaffen, so dass die Beschreibung auf eines beschränkt werden kann.

Das Getriebe 43 besteht aus einem ersten, mit der Abtriebswelle des Servomotors 45 (Fig. 6) in Antriebsverbindung stehenden Zahnrads 69, einem mit dem Spindelgetriebe 36 (Fig. 6) gekuppelten zweiten Zahnrad 70 und einem sich zwischen diesen beiden Zahnrädern 69, 70 befindlichen dritten Zahnrad 71. Wie Fig. 19 erkennen lässt, besteht das somit zwischengeordnete Zahnrad 71 aus zwei zueinander koaxialen, relativ zueinander verdrehbaren Zahnscheiben 71', 71", so dass durch Verdrehung die Darstellung einer spielfreien Antriebsverbindung zwischen dem Servomotor 45 und dem Spindelgetriebe 36 möglich ist.

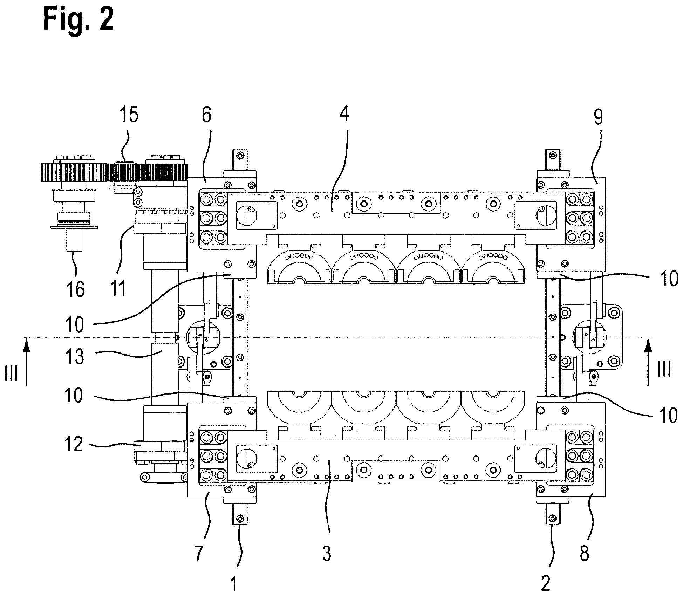

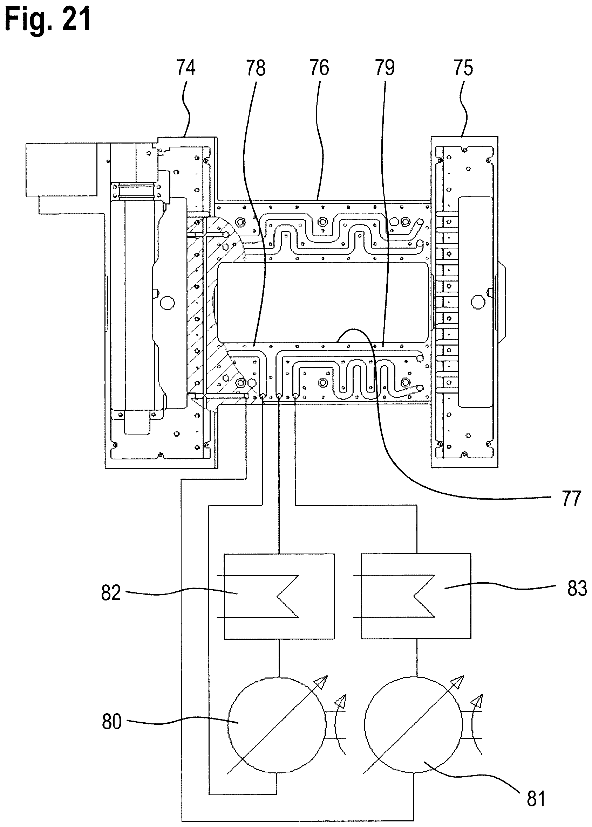

Zur Beschreibung eines Kühlwasserkreislaufs wird im Folgenden auf die Darstellung gemäß Fig. 21 Bezug genommen. Diese zeigt in einer Draufsicht der Darstellung gemäß Fig. 2 in teilweiser Schnittdarstellung zwei langgestreckte, sich parallel zueinander erstreckende Gehäuse 74, 75, die jeweils zur Aufnahme der beiden Kniehebelgetriebe 17 sowie des Spindelgetriebes 13 eingerichtet sind und die in der Nähe ihrer Endbereiche durch zwei sich parallel zueinander erstreckende Querstrukturen 76, 77 untereinander in Verbindung stehen. Innerhalb der beiden Querstrukturen 76, 77, und zwar deren Volumen bzw. deren Masse gleichförmig durchdringend, erstrecken sich zwei Netzwerke 78, 79 bestehend aus zur Führung von Kühlwasser bestimmten Leitungen, die außerhalb der Querstrukturen jeweils durch eine Pumpe 80, 81 sowie einen Kühler 82, 83 zu vollständigen Kreisläufen komplettiert werden.

In Verbindung mit einer die Formen sowie die Formenhalter erfassenden Kühlluftführung entsprechend den Darstellungen der Figuren 11 bis 14 ist auf diese Weise eine temperaturbedingte Verspannung der Formhalter gegenüber dem Maschinengru8ndkörper verhindert.

Die Führung 1 ist Teil eines Schmierstoffkreislaufs, in den das Gehäuse 74 einbezogen ist, wobei der Zulauf über die Führung 1 erfolgt, wobei innerhalb des Gehäuses 74 das Spindelgetriebe 13 sowie das Getriebe 15 durch überlau-fenden Schmierstoff geflutet werden, und wobei ein Überlauf 84 eingerichtet ist, durch dessen Lage das Füllstandsniveau innerhalb des Gehäuses 74 beschränkt ist. Der überlaufende Schmierstoff gelangt über ein Filter 85, einen Kühler 86 und eine Pumpe 87 zurück zu der Führung 1, somit einen geschlossenen Kreislauf bildend.

Ein vergleichbarer Schmierstoffkreislauf ist hinsichtlich der Führung 2 eingerichtet.

Ein solches Schmierungskonzept ist sinngemäß gleichermaßen bei den ersten und zweiten Varianten eines erfindungsgemäßen Schließmechanismus anwendbar. Ein solches Umlaufsystem erspart die ansonsten gegebene Notwendigkeit einer Verlustschmierung und stellt somit einen Beitrag zu einem wirtschaftlichen Betrieb einer so ausgerüsteten Glasformmaschine dar.

Die Konzepte der Schmierung und Kühlung sind ebenfalls bei beiden Varianten einsetzbar.

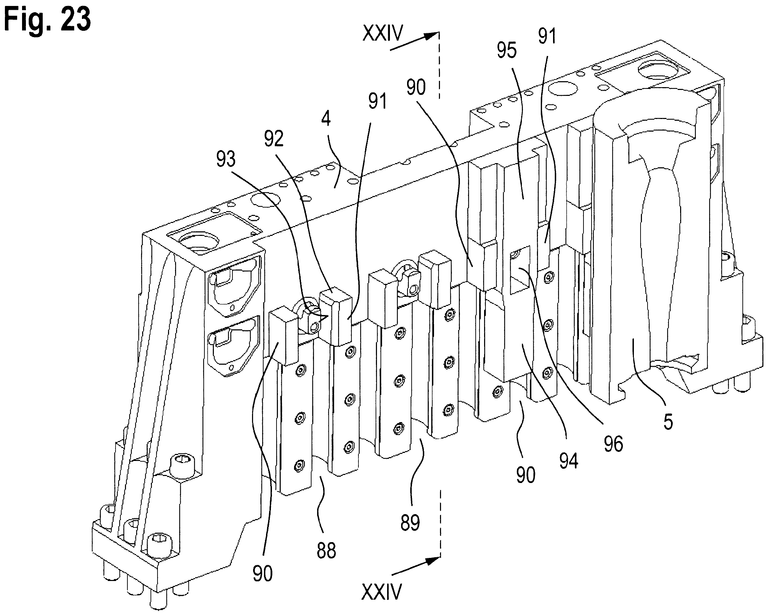

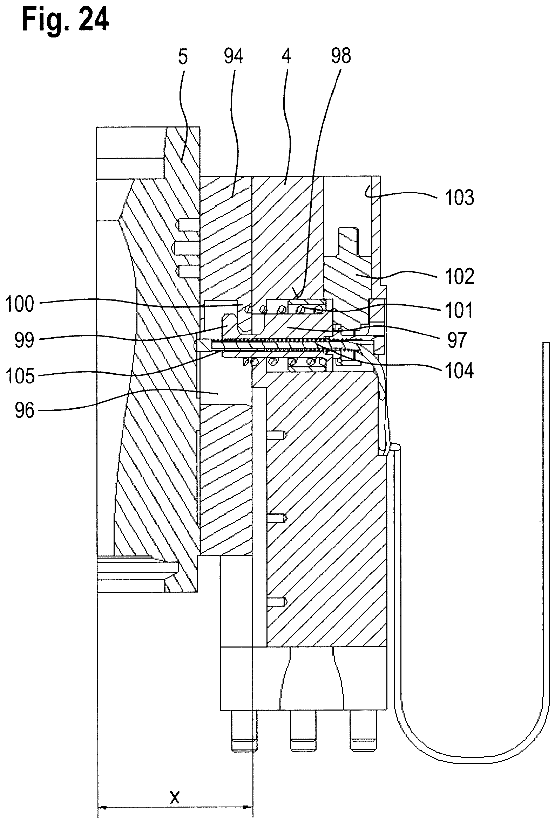

In den Figuren 23 und 24 ist das Konzept der Zentrierung und Fixierung einer Formhälfte 5 an einem Formhalter 4 dargestellt, wobei die Fixierung an dem Formhalter 3 in gleicher Weise beschaffen ist, so dass die Beschreibung auf einen Formhalter 4 beschränkt werden kann.

Mit 88, 89, 90 sind drei zueinander parallele, sich vertikal erstreckende Nuten auf der dem anderen, hier nicht dargestellten Formhalter zugekehrten Seite des Formhalters 4 bezeichnet, an deren oberem Endbereich sich beiderseits der jeweiligen Nut quaderförmige Anlageelemente 90, 91 befinden. Diese Anlageelemente 90, 91 bilden jeweils oberseitige Anlagekanten und seitliche Führungsflächen 93 für einen Nutenstein 94, der in seinem oberen Abschnitt ein T-Profil bildet, dessen Grundseite an dem Formhalter 4 anliegt, der beidseitig auf den Anlagekanten der Anlageelementen 91, 92 aufliegt und durch die seitlichen Führungsflächen 93 zentriert ist. Die Grundebene des Formhalters 4 bildet die Anlagefläche für den Nutenstein 94.

Der Nutenstein 94 bildet auf seiner dem Formhalter 4 abgekehrten Seite einen durchgängigen vertikal verlaufenden Steg 95, der in einem etwa mittleren Bereich, den beiden Anlageelementen 90, 91 benachbart eine Ausnehmung 96 aufweist, in die ein in einer Ausnehmung 98 des Formhalters 4 horizontal geführter Spanner 97 hineinragt, der an seinem, dem Nutenstein 94 zugekehrten Ende in einem Haken 99 endet, der zum Hintergreifen eines die Ausnehmung 96 auf ihrer, der Formhälfte 5 abgekehrten Seite begrenzenden Steges 100 bestimmt ist.

Der Nutenstein 94 steht in nicht näher dargestellter Weise mit der Formhälfte 5 in Verbindung, so dass beide Komponenten bei einem Wechsel einer Formhälfte als Baugruppe einheitlich handhabbar sind.

Die Anlage des Hakens 99 an dem Steg 100 steht unter der Vorspannung einer Feder 101, deren Spannung mittels eines in einer Bohrung 103 des Formhalters 4 gelagerten Exzenters 102 einstellbar ist. Der Spanner 97 ist mittels des Exzenters 102 in Verbindung mit der Feder 101 in jedem Fall zwischen einer Montageposition der Formhälfte, in der ein gespanntes Hintergreifen des Steges 100 durch den Haken 99 gegeben ist und einer Demontageposition, in der ein Ein- auf bzw. ein Aushängen von dem Haken 99 möglich ist, verschiebbar.

Der federbelastete Spanner 97 in Verbindung mit dem Nutenstein 94 bilden ein schnell und einfach zu betätigendes Spannsystem. In der Montageposition ist die Formhälfte jedenfalls allseitig fixiert.
Mit 104 ist ein Temperatursensor bezeichnet, der in einer Bohrung 105 des Spanners 97 geführt ist und an seinem freien Ende mit der Formhälfte 5 in Berührung steht, hierbei deren Temperatur erfassend.

Die Abmessungen der Ausnehmung 96 sowie die Positionen des Hakens und des Steges 100 sind mit der Maßgabe bemessen, dass die mit dem Nutenstein 94 in Verbindung stehende Formhälfte 5 durch Einführen des Hakens 99 in die Ausnehmung 96 in ihrer Arbeitsposition fixierbar ist, und zwar mittels des Exzenters 102. In der so dargestellten Einbauposition ist die Formhälfte 5 ist die Formhälfte zentriert.

**Bezugszeichenliste**

| | | | |
|---|---|---|---|
| 1. | Führung | 14. | Achse |
| 2. | Führung | 15. | Getriebe |
| 3. | Formhalter | 16. | Stelle |
| 4. | Formhalter | 17. | Kniebelgetriebe |
| 5. | Formhälfte | 18. | Kniehebel |
| 6. | Grundplatte | 19. | Kniehebel |
| 7. | Grundplatte | 20. | Verbindungshebel |
| 8. | Grundplatte | 21. | Kolbenstange |
| 9. | Grundplatte | 22. | Kolben-Zylinder-Einheit |
| 10. | Schlitten | 23. | Antriebseinheit |
| 11. | Montageplatte | 24. | Antriebseinheit |
| 12. | Montageplatte | 25. | Führung |
| 13. | Spindelgetriebe | 26. | Führung |
| 27. | Formhalter | 94. | Nutenstein |
| 28. | Formhalter | 95. | Steg |
| 29. | Formhälfte | 96. | Ausnehmung |
| 30. | Grundplatte | 97. | Spanner |
| 31. | Grundplatte | 98. | Ausnehmung |
| 32. | Grundplatte | 99. | Haken |
| 33. | Grundplatte | 100. | Steg |
| 34. | Grundplatte | 101. | Feder |
| 35. | Schlitten | 102. | Exzenter |
| 36. | Spindelgetriebe | 103. | Bohrung |
| 37. | Spindelgetriebe | | |
| 38. | Gewindespindel | | |
| 39. | Gewindeabschnitt | | |
| 40. | Gewindeabschnitt | | |
| 41. | Gewindemuffe | | |
| 42. | Gewindemuffe | | |
| 43. | Getriebe | | |
| 44. | Getriebe | | |
| 45. | Servomotor | | |
| 46. | Servomotor | | |
| 47. | Leitungselement | | |
| 48. | Welle | | |
| 49. | Leitung | | |
| 50. | Kammer | | |
| 51. | Kammer | | |
| 52. | Austrittsorgan | | |
| 53. | Kammer | | |
| 54. | Kammer | | |
| 55. | Kühlleitung | | |
| 56. | Stellorgan | | |
| 57. | Welle | | |
| 58. | Leitung | | |
| 59. | Regelklappe | | |
| 60. | Verschlussklappe | | |
| 61. | Leitung | | |
| 62. | Ringspannkörper | | |
| 63. | Spannhebel | | |
| 64. | Spannschraube | | |
| 65 | Gehäusekörper | | |
| 66. | Flansch | | |
| 67. | Handgriff | | |
| 68. | Anschluss | | |
| 69. | Zahnrad | | |
| 70. | Zahnrad | | |
| 71. | Zahnrad | | |
| 72. | Zahnscheibe | | |
| 73. | Zahnscheibe | | |
| 74. | Gehäuse | | |
| 75. | Gehäuse | | |
| 76. | Querstruktur | | |
| 77. | Querstruktur | | |
| 78. | Netzwerk | | |
| 79. | Netzwerk | | |
| 80. | Pumpe | | |
| 81. | Pumpe | | |
| 82. | Kühler | | |
| 83. | Kühler | | |
| 84. | Überlauf | | |
| 85. | Filter | | |
| 86. | Kühler | | |
| 87. | Pumpe | | |
| 88. | Nut | | |
| 89. | Nut | | |
| 90. | Nut | | |
| 91. | Anlageelement | | |
| 92. | Anlageelement | | |
| 93. | Führungsfläche | | |

## Patentansprüche

1. Schließmechanismus für die Formen einer I.S.-Maschine mit zwei, zwischen einer Öffnungs- und einer Schließstellung verschiebbar angeordneten, jeweils zur Befestigung zumindest einer Formhälfte (5, 29) eingerichteten Formhaltern (3, 4; 27, 28), und wenigstens einem zum Verschieben der Formhalter (3, 4; 27, 28) zwischen den genannten Stellungen eingerichteten Antrieb, wobei jeder Formhalter (3, 4; 27, 28) mit einem in diesen integrierten, zur Führung eines Kühlmittels bestimmten Leitungsnetzwerk ausgerüstet ist, **dadurch gekennzeichnet, dass** die Formhalter (3, 4; 27, 28) jochartig ausgebildet, beidseitig auf sich parallel zueinander erstreckenden geradlinigen Führungen (1, 2; 25, 26) aufgelagert und zwischen den genannten Stellungen verschiebbar sind, dass die beiden Formhalter (3, 4; 27, 28) über zumindest ein zur Darstellung einer Linearbewegung bestimmtes und eingerichtetes Spindelgetriebe (13, 36, 37) untereinander in Verbindung stehen, dass der Antrieb mit diesem Spindelgetriebe gekuppelt ist, dass das eingesetzte Spindelgetriebe (13, 36, 37) aus einer mit dem Antrieb in Verbindung stehenden, zwei gegenläufige Gewindeabschnitte (39, 40) aufweisenden Gewindespindel (38) besteht, die jeweils mit einer, mit einem Formhalter (3, 4; 27, 28) in Verbindung stehenden Gewindemuffe im Eingriff stehen und dass Gehäuse (74, 75) als Teile des Maschinengrundkörpers der I.S.-Maschine gegeben sind, die zumindest zur Aufnahme der Spindelgetriebe (13, 36, 37) eingerichtet sind, wobei die Gehäuse (74, 75) durch Querstrukturen (76, 77) des Maschinengrundkörpers in einer Richtung senkrecht zu den Führungen (1, 2; 25, 26) untereinander in Verbindung stehen, und dass innerhalb der Querstrukturen (76, 77) zumindest ein, zur Führung eines Kühlmittels bestimmtes Netzwerk (78, 79) angeordnet ist.

2. Schließmechanismus nach Anspruch 1, **dadurch gekennzeichnet, dass** der Antrieb der Formhalter (3, 4; 27, 28) durch einen für die Öffnungs- und Schließbewegung eingerichteten elektrischen Servomotor dargestellt ist und dass zum Verspannen der Formhalter in deren Schließstellung zumindest eine pneumatisch zu betätigende Kolben-Zylinder-Einheit (22) vorgesehen ist.

3. Schließmechanismus nach Anspruch 1 oder 2, **dadurch gekennzeichnet, dass** ein zur Bewirkung der Öffnungs- und Schließbewegung der Formhalter (3, 4; 27, 28) bestimmter elektrischer Servomotor auf einer Seite der Formhalter, einer der beiden Führungen (1, 2; 25, 26) benachbart und dass auf beiden Seiten der Formhalter jeweils eine zu deren Verspannung in der Schließstellung bestimmte, pneumatisch zu betätigende Kolben-Zylinder-Einheit (22) angeordnet ist.

4. Schließmechanismus nach Anspruch 2 oder 3, **dadurch gekennzeichnet, dass** die oder jede Kolben-Zylinder-Einheit (22) über ein Kniehebelgetriebe (17) mit den zu verspannenden Formhaltern (3, 4; 27, 28) in Verbindung steht.

5. Schließmechanismus nach Anspruch 1, **dadurch gekennzeichnet, dass** der Antrieb der Formhalter (3, 4; 27, 28) durch jeweils einen, seitlich bezüglich der Formhalter, der jeweiligen Führung benachbart angeordneten elektrischen Servomotor (45, 46) dargestellt ist, wobei die Servomotoren gleichzeitig zur Verspannung der Formhalter in deren Schließstellung eingerichtet sind.

6. Schließmechanismus nach Anspruch 5, **gekennzeichnet durch** Führungen (104) zwischen dem Formhalter (3, 4; 27, 28) und einem Maschinengrundkörper, eine verspannungsfreie betriebsbedingte Wärmedehnung des Formhalters (3, 4; 27, 28) ermöglichend.

7. Schließmechanismus nach einem der Ansprüche 1 bis 6, **dadurch gekennzeichnet, dass** zur Drehmomentübertragung von dem Antrieb auf das Spindelgetriebe (13, 36, 37) ein Getriebe (15, 43, 44) zwischengeordnet ist, dass das Getriebe (15, 43, 44) als Stirnradgetriebe ausgebildet ist und dass zumindest eines der Zahnräder (70, 71) des Stirnradgetriebes aus zwei, relativ zueinander verdrehbaren und in ihrer Verdrehposition fixierbaren Zahnscheiben (72, 73) besteht.

8. Schließmechanismus nach einem der Ansprüche 1 bis 7, **dadurch gekennzeichnet, dass** das zur Führung eines Kühlmittels bestimmte Leitungsnetzwerk zur Kühlung zumindest einer Formhälfte (5, 29) eingerichtet ist.

9. Schließmechanismus nach einem der Ansprüche 1 bis 8, **dadurch gekennzeichnet, dass** die durch das Leitungsnetzwerk dargestellte Kühlung zumindest teilweise als Permanentkühlung eingerichtet ist.

10. Schließmechanismus nach einem der Ansprüche 1 bis 9, **dadurch gekennzeichnet, dass** für zumindest einen Teil der Viertelformen der Formhälften (5, 29) eine individuelle Einstellmöglichkeit für den Fluss eines Kühlmittels eingerichtet ist.

11. Schließmechanismus nach einem der Ansprüche 1 bis 10, **dadurch gekennzeichnet, dass** das zur Führung eines Kühlmittels bestimmte Leitungsnetzwerk zur Kühlung zumindest einer Mündungsform eingerichtet ist.

12. Schließmechanismus nach einem der Ansprüche 1 bis 11, **dadurch gekennzeichnet, dass** das zur Führung eines Kühlmittels bestimmte Netzwerk (78, 79) jeweils in eine Kreislaufführung eingebunden ist, welche zumindest einen Kühler (82, 83) und eine Pumpe (80, 81) umfasst.

13. Schließmechanismus nach einem der Ansprüche 1 bis 12, **dadurch gekennzeichnet, dass** zwei, jeweils zur Führung eines Kühlmittels bestimmte Netzwerke (78, 79) beinhaltende Kreislaufführungen vorgesehen sind, welche jeweils zumindest zur Kühlung eines Teiles der Querstrukturen (76, 77) eingerichtet sind.

14. Schließmechanismus nach einem der Ansprüche 1 bis 13, **dadurch gekennzeichnet, dass** eine Schmierstoffversorgung als Umlaufschmierung eingerichtet ist, welche durch einen, zumindest einen Kühler (86) und eine Pumpe (87) einbeziehenden Kreislauf dargestellt ist.

15. Schließmechanismus nach Anspruch 14, **dadurch gekennzeichnet, dass** die Führungen (1, 2; 25, 26) oberseitig mit Austrittsöffnungen für einen Schmierstoff versehen sind.

16. Schließmechanismus nach einem der Ansprüche 1 bis 15, **dadurch gekennzeichnet, dass** die Gehäuse (74, 75) zur Aufnahme der Spindelgetriebe (13, 36, 37) sowie der Kniehebelgetriebe (17) eingerichtet sind.

17. Schließmechanismus nach einem der Ansprüche 1 bis 15, **dadurch gekennzeichnet, dass** die Gehäuse (74, 75) zur Aufnahme der Getriebe (15, 43, 44) eingerichtet sind.

18. Schließmechanismus nach einem der Ansprüche 1 bis 17, **dadurch gekennzeichnet, dass** die Gehäuse (74, 75) im Rahmen der Schmierstoffversorgung zur Darstellung eines Schmierstoffbades sowie eines Überlaufs für den Schmierstoff eingerichtet sind.

19. Schließmechanismus nach einem der Ansprüche 1 bis 18, **dadurch gekennzeichnet, dass** die Gehäuse (74, 75) durch auf Graphitdichtungen gleitfähig angeordnete Deckelsegmente verschlossen und innenseitig mit Sperrluft beaufschlagbar sind.

20. Schließmechanismus nach einem der Ansprüche 7 bis 19, **gekennzeichnet durch** eine ohne ein Werkzeug zu betätigende Klemmverbindung zwischen einem Servomotor (45, 46) und einem Getriebe (15, 43, 44).

21. Schließmechanismus nach einem der Ansprüche 1 bis 20, **dadurch gekennzeichnet, dass** an jedem Formhalter (3, 4) und für jede Formhälfte (5) eine Anordnung von vertikalen und horizontalen Führungen, jeweils eine Montageposition für eine Formhälfte (5) darstellend, angeordnet sind, und dass an jeder Formhälfte (5) wenigstens ein zum Zusammenwirken mit dieser Anordnung eingerichtetes Gegenelement angeordnet ist.

22. Schließmechanismus nach Anspruch 21, **dadurch gekennzeichnet, dass** die Anordnung jeweils eine seitliche Führungsfläche (93) und eine horizontale Auflagefläche bildende Anlageelemente (90, 91) aufweist und dass das genannte Gegenelement durch einen an der zugekehrten Seite der Formhälfte angebrachten Nutenstein (94) dargestellt ist.

23. Schließmechanismus nach Anspruch 22, **dadurch gekennzeichnet, dass** an dem Nutenstein (94) Formelemente angeformt sind, die zur Auflage auf jeweils zwei Anlageelementen (90, 91) bestimmt und ausgestaltet sind.

24. Schließmechanismus nach Anspruch 22 oder 23, **dadurch gekennzeichnet, dass** zwischen dem Formhalter (3, 4) und der Formhälfte (5) eine, eine Spannkraft zwischen Formhälfte und Formhalter entwickelnde Spanneinrichtung vorgesehen ist.

25. Schließmechanismus nach Anspruch 24, **dadurch gekennzeichnet, dass** die Spanneinrichtung aus einem verschiebbar angeordneten Haken (99) besteht, der zum Hintergreifen eines Steges (100) des Nutensteins (94) bestimmt und eingerichtet ist.

## Claims

1. Closing mechanism for the moulds of an IS machine with two mould holders (3, 4; 27, 28) which are disposed so as to be displaceable between an open and a closed position and are respectively arranged to fasten at least one mould half(5, 29), and with at least one drive which is arranged to displace the mould holders (3, 4; 27, 28) between said positions, wherein each mould holder (3, 4; 27, 28) is fitted with a line network integrated therein and intended to carry a coolant, **characterised in that** the mould holders (3, 4; 27, 28) are formed in a yoke-like manner, are supported on both sides on straight guides (1, 2; 25, 26) extending parallel to one another and are displaceable between said positions, **in that** the two mould holders (3, 4; 27, 28) are connected to one another by means of at least one spindle gear (13, 36, 37) intended and arranged to provide a linear motion, **in that** the drive is coupled to this spindle gear, **in that** the spindle gear (13, 36, 37) used consists of a threaded spindle (38) connected to the drive and comprising two opposing threaded portions (39, 40) which are respectively engaged with a threaded sleeve connected to a mould holder (3, 4; 27, 28), and **in that** housings (74, 75) are provided as parts of the machine base body of the IS machine and are arranged at least to receive the spindle gears (13, 36, 37), wherein the housings (74, 75) are connected to one another in a direction perpendicular to the guides (1, 2; 25, 26) by means of transverse structures (76, 77) of the machine base body, and **in that** at least one network (78, 79) intended to carry a coolant is disposed within the transverse structures (76, 77).

2. Closing mechanism as claimed in claim 1, **characterised in that** the drive of the mould holders (3, 4; 27, 28) is constituted by an electric servomotor arranged for the opening and closing movement, and **in that** in order to brace the mould holders in the closed position thereof at least one piston-cylinder unit (22) to be actuated pneumatically is provided.

3. Closing mechanism as claimed in claim 1 or 2, **characterised in that** an electric servomotor intended to effect the opening and closing movement of the mould holders (3, 4; 27, 28) is disposed on one side of the mould holders, adjacent to one of the two guides (1, 2; 25, 26), and **in that** disposed on both sides of the mould holders is a respective piston-cylinder unit (22) which is intended for bracing same in the closed position and is to be actuated pneumatically.

4. Closing mechanism as claimed in claim 2 or 3, **characterised in that** the or each piston-cylinder unit (22) is connected to the mould holders (3, 4; 27, 28) to be braced by means of a knee lever gear (17).

5. Closing mechanism as claimed in claim 1, **characterised in that** the drive of the mould holders (3, 4; 27, 28) is constituted by a respective electric servomotor (45, 46) which is disposed laterally with respect to the mould holders and adjacent to the respective guide, wherein the servomotors are simultaneously arranged to brace the mould holders in their closed position.

6. Closing mechanism as claimed in claim 5, **characterised by** guides (104) between the mould holder (3, 4; 27, 28) and a machine base body, making possible a bracing-free operationally imposed thermal expansion of the mould holder (3, 4; 27, 28).

7. Closing mechanism as claimed in any one of claims 1 to 6, **characterised in that**, for the transmission of a turning moment from the drive to the spindle gear (13, 36, 37) a transmission (15, 43, 44) is intermediately disposed, **in that** the transmission (15, 43, 44) is formed as a spur gear unit, and **in that** at least one of the gear wheels (70, 71) of the spur gear unit consists of two toothed wheels (72, 73) which are rotatable relative to one another and can be fixed in their rotational position.

8. Closing mechanism as claimed in any one of claims 1 to 7, **characterised in that** the line network intended to carry a coolant is arranged for cooling at least one mould half (5, 29).

9. Closing mechanism as claimed in any one of claims 1 to 8, **characterised in that** the cooling arrangement constituted by the line network is arranged at least partially as a permanent cooling arrangement.

10. Closing mechanism as claimed in any one of claims 1 to 9, **characterised in that** an individual adjustment capability for the flow of a coolant is provided for at least a part of the quarter moulds of the mould halves (5, 29).

11. Closing mechanism as claimed in any one of claims 1 to 10, **characterised in that** the line network intended to carry a coolant is arranged for cooling at least one neck mould.

12. Closing mechanism as claimed in any one of claims 1 to 11, **characterised in that** the network (78, 79) intended to carry a coolant is respectively incorporated into a circuitry arrangement which comprises at least a cooler (82, 83) and a pump (80, 81).

13. Closing mechanism as claimed in any one of claims 1 to 12, **characterised in that** two circuitry arrangements respectively containing networks (78, 79) which are intended to carry a coolant are provided and are respectively arranged at least for cooling a part of the transverse structures (76, 77).

14. Closing mechanism as claimed in any one of claims 1 to 13, **characterised in that** a lubricant supply is arranged as a recirculating lubrication arranged which is constituted by a circuit which includes at least a cooler (86) and a pump (87).

15. Closing mechanism as claimed in claim 14, **characterised in that** the guides (1,2; 25, 26) are provided on the top with outlet openings for a lubricant.

16. Closing mechanism as claimed in any one of claims 1 to 15, **characterised in that** the housings (74, 75) are arranged to receive the spindle gears (13, 36, 37), as well as the knee lever gears (17).

17. Closing mechanism as claimed in any one of claims 1 to 15, **characterised in that** the housings (74, 75) are arranged to receive the transmissions (15, 43, 44).

18. Closing mechanism as claimed in any one of claims 1 to 17, **characterised in that** the housings (74, 75) are arranged as part of the supply of lubricant to constitute a lubricant bath and an overflow for the lubricant.

19. Closing mechanism as claimed in any one of claims 1 to 18, **characterised in that** the housings (74, 75) are closed by cover segments slidably disposed on graphite seals and can be acted upon by sealing air on the inside.

20. Closing mechanism as claimed in any one of claims 7 to 19, **characterised by** a clamping connection to be operated without the use of a tool between a servomotor (45, 46) and a transmission (15, 43, 44).

21. Closing mechanism as claimed in any one of claims 1 to 20, **characterised in that** an arrangement of vertical and horizontal guides, each constituting a mounting position for a mould half(5), is disposed on each mould holder (3, 4) and for each mould half(5) and **in that** at least one counter element arranged to cooperate with this arrangement is disposed on each mould half (5).

22. Closing mechanism as claimed in claim 21, **characterised in that** the arrangement comprises contact elements (90, 91) respectively forming a lateral guide surface (93) and a horizontal support surface, and **in that** said counter element is constituted by a sliding block (94) attached to the facing side of the mould half.

23. Closing mechanism as claimed in claim 22, **characterised in that** mould elements are integrally formed on the sliding block (94) and are intended and formed to be supported respectively on two contact elements (90, 91).

24. Closing mechanism as claimed in claim 22 or 23, **characterised in that** a tensioning device which develops a tensioning force between the mould half(5) and the mould holder (3, 4) is provided between the mould holder and the mould half.

25. Closing mechanism as claimed in claim 24, **characterised in that** the tensioning device consists of a displaceably disposed hook (99) intended and arranged to engage behind a web (100) of the sliding block (94).

## Revendications

1. Mécanisme de fermeture pour les moules d'une machine IS avec deux supports de moule (3, 4 ; 27, 28) disposés de manière à pouvoir être coulissés entre une position d'ouverture et une position de fermeture, agencés respectivement pour fixer au moins une moitié de moule (5, 29), et au moins un entraînement agencé pour faire coulisser les supports de moule (3, 4 ; 27, 28) entre les positions mentionnées, dans lequel chaque support de moule (3, 4 ; 27, 28) est équipé d'un réseau de lignes intégré dans ledit support de moule, se destinant à guider un liquide de refroidissement, **caractérisé en ce que** les supports de moule (3, 4 ; 27, 28) sont réalisés à la manière d'une culasse, sont montés des deux côtés sur des guidages (1, 2 ; 25, 26) rectilignes s'étendant les uns par rapport aux autres de manière parallèle et peuvent être coulissés entre les positions mentionnées, que les deux supports de moule (3, 4 ; 27, 28) sont reliés l'un à l'autre par l'intermédiaire d'au moins un engrenage à broche (13, 36, 37) se destinant à et agencé pour constituer un déplacement linéaire, que l'entraînement est couplé audit engrenage à broche, que l'engrenage à broche (13, 36, 37) utilisé est composé d'une broche filetée (38) reliée à l'entraînement, présentant deux sections filetées (39, 40) opposées, qui sont en prise respectivement avec un manchon fileté relié à un support de moule (3, 4 ; 27, 28) et que des boîtiers (74, 75) font partie du corps de base de machine de la machine IS, qui sont agencés au moins pour recevoir l'engrenage à broche (13, 36, 37), dans lequel les boîtiers (74, 75) sont reliés les uns aux autres par des structures transversales (76, 77) du corps de base de machine dans une direction de manière perpendiculaire par rapport aux guidages (1, 2 ; 25, 26), et qu'au moins un réseau (78, 79) se destinant à guider un liquide de refroidissement est disposé à l'intérieur des structures transversales (76, 77).

2. Mécanisme de fermeture selon la revendication 1, **caractérisé en ce que** l'entraînement des supports de moule (3, 4 ; 27, 28) est constitué d'un servomoteur électrique agencé pour le déplacement d'ouverture et de fermeture, et qu'au moins une unité piston-cylindre (22) à actionner de manière pneumatique est prévue pour serrer les supports de moule dans leur position de fermeture.

3. Mécanisme de fermeture selon la revendication 1 ou 2, **caractérisé en ce qu'**un servomoteur électrique se destinant à provoquer le déplacement d'ouverture et de fermeture des supports de moule (3, 4 ; 27, 28) est adjacent sur un côté des supports de moule à un des deux guidages (1, 2 ; 25, 26), et que respectivement une unité piston-cylindre (22) se destinant au serrage des supports de moule dans la position de fermeture, à actionner de manière pneumatique est disposée sur les deux côtés des supports de moule.

4. Mécanisme de fermeture selon la revendication 2 ou 3, **caractérisé en ce que** l'unité piston-cylindre ou chaque unité piston-cylindre (22) est reliée aux supports de moule (3, 4 ; 27, 28) à serrer par l'intermédiaire d'un engrenage à levier coudé (17).

5. Mécanisme de fermeture selon la revendication 1, **caractérisé en ce que** l'entraînement des supports de moule (3, 4 ; 27, 28) est constitué respectivement d'un servomoteur (45, 46) électrique disposé de manière latérale par rapport aux supports de moule, de manière adjacente au guidage respectif, dans lequel les servomoteurs sont agencés dans le même temps pour le serrage des supports de moule dans leur position de fermeture.

6. Mécanisme de fermeture selon la revendication 5, **caractérisé par** des guidages (104) entre le support de moule (3, 4 ; 27, 28) et un corps de base de machine, permettant une dilatation thermique liée au fonctionnement sans serrage du support de moule (3, 4 ; 27, 28).

7. Mécanisme de fermeture selon l'une quelconque des revendications 1 à 6, **caractérisé en ce qu'**un engrenage (15, 43, 44) est intercalé aux fins de la transmission de couple de rotation de l'entraînement sur l'engrenage à broche (13; 36; 37), que l'engrenage (15, 43, 44) est réalisé sous la forme d'un engrenage à roue frontale, et qu'au moins une des roues dentées (70, 71) de l'engrenage à roue dentée est composée de deux disques dentés (72, 73) pouvant tourner l'un par rapport à l'autre et pouvant être fixés dans leur position de rotation.

8. Mécanisme de fermeture selon l'une quelconque des revendications 1 à 7, **caractérisé en ce que** le réseau de lignes se destinant à guider le liquide de refroidissement est agencé pour le refroidissement d'au moins une moitié de moule (5, 29).

9. Mécanisme de fermeture selon l'une quelconque des revendications 1 à 8, **caractérisé en ce que** le refroidissement constitué du réseau de lignes est agencé au moins en partie sous la forme d'un refroidissement permanent.

10. Mécanisme de fermeture selon l'une quelconque des revendications 1 à 9, **caractérisé en ce qu'**une possibilité de réglage individuelle pour le flux d'un liquide de refroidissement est agencée pour au moins une partie des quarts de moule des moitiés de moule (5, 29) .

11. Mécanisme de fermeture selon l'une quelconque des revendications 1 à 10, **caractérisé en ce que** le réseau de lignes se destinant à guider un liquide de refroidissement est agencé pour refroidir au moins un moule d'embouchure.

12. Mécanisme de fermeture selon l'une quelconque des revendications 1 à 11, **caractérisé en ce que** le réseau (78, 79) se destinant à guider un liquide de refroidissement est intégré respectivement dans un guidage de circuit, qui comprend au moins un refroidisseur (82, 83) et une pompe (80, 81).

13. Mécanisme de fermeture selon l'une quelconque des revendications 1 à 12, **caractérisé en ce que** sont prévus deux guidages de circuit contenant certains réseaux (78, 79) respectivement aux fins du guidage d'un liquide de refroidissement, lesquels sont agencés respectivement au moins pour le refroidissement d'une partie des structures transversales (76, 77).

14. Mécanisme de fermeture selon l'une quelconque des revendications 1 à 13, **caractérisé en ce qu'**une alimentation en lubrifiant est agencée sous la forme d'une lubrification continue, laquelle est constituée d'un circuit incorporant au moins un refroidisseur (86) et une pompe (87).

15. Mécanisme de fermeture selon la revendication 14, **caractérisé en ce que** les guidages (1, 2 ; 25, 26) sont pourvus côté supérieur d'ouvertures de sortie pour un lubrifiant.

16. Mécanisme de fermeture selon l'une quelconque des revendications 1 à 15, **caractérisé en ce que** les boîtiers (74, 75) sont agencés pour recevoir les engrenages à broche (13, 36, 37) ainsi que les engrenages à levier coudé (17).

17. Mécanisme de fermeture selon l'une quelconque des revendications 1 à 15, **caractérisé en ce que** les boîtiers (74, 75) sont agencés pour recevoir les engrenages (15, 43, 44).

18. Mécanisme de fermeture selon l'une quelconque des revendications 1 à 17, **caractérisé en ce que** les boîtiers (74, 75) dans le cadre de l'alimentation en lubrifiant sont agencés pour constituer un bain de lubrifiant ainsi qu'un trop-plein pour le lubrifiant.

19. Mécanisme de fermeture selon l'une quelconque des revendications 1 à 18, **caractérisé en ce que** les boîtiers (74, 75) sont fermés par des segments formant couvercle disposés de manière à pouvoir glisser sur des joints d'étanchéité en graphite et peuvent être soumis côté intérieur à l'action d'air de barrage.

20. Mécanisme de fermeture selon l'une quelconque des revendications 7 à 19, **caractérisé par** une liaison par serrage à actionner sans outil entre un servomoteur (45, 46) et un engrenage (15, 43, 44).

21. Mécanisme de fermeture selon l'une quelconque des revendications 1 à 20, **caractérisé en ce que** sont disposés au niveau de chaque support de moule (3, 4) et pour chaque moitié de moule (5), un ensemble de guidages verticaux et horizontaux, constituant respectivement une position de montage pour une moitié de moule (5), et qu'au moins un contre-élément agencé pour coopérer avec ledit ensemble est disposé au niveau de chaque moitié de moule (5).

22. Mécanisme de fermeture selon la revendication 21, **caractérisé en ce que** l'ensemble présente des éléments d'appui (90, 91) formant respectivement une surface de guidage (93) latérale et une surface de réception horizontale, et que le contre-élément mentionné est constitué d'une clavette rainurée (94) installée au niveau du côté tourné de la moitié de moule.

23. Mécanisme de fermeture selon la revendication 22, **caractérisé en ce que** sont formés au niveau de la clavette rainurée (94) des éléments de moule, qui se destinent à et sont configurés pour être respectivement déposés sur deux éléments d'appui (90, 91) .

24. Mécanisme de fermeture selon la revendication 22 ou 23, **caractérisé en ce qu'**un dispositif de serrage développant une force de serrage entre une moitié de moule et un support de moule est prévu entre le support de moule (3, 4) et la moitié de moule (5).

25. Mécanisme de fermeture selon la revendication 24, **caractérisé en ce que** le dispositif de serrage est composé d'un crochet (99) disposé de manière à pouvoir être coulissé, qui se destine à et est agencé pour venir en prise par l'arrière avec une entretoise (100) de la clavette rainurée (94).
